# EUROPÄISCHE PATENTSCHRIFT

(11) **EP 0 657 001 B1**
(45) Veröffentlichungstag und Bekanntmachung des Hinweises auf die Patenterteilung: **10.12.1997**
(21) Anmeldenummer: 93919242.3
(22) Anmeldetag: 02.09.1993
(51) Int. Cl.: F16H 61/00

(54) **VORRICHTUNG ZUR REGELUNG DES ÜBERSETZUNGSVERHÄLTNISSES EINES STUFENLOSEN GETRIEBES**
DEVICE FOR REGULATING THE REDUCTION RATIO OF AN INFINITELY VARIABLE TRANSMISSION
DISPOSITIF DE REGLAGE DU RAPPORT DE DEMULTIPLICATION D'UNE TRANSMISSION A VARIATION CONTINUE

(30) Priorität: 04.09.1992 DE 4229585
(43) Veröffentlichungstag der Anmeldung: 14.06.1995
(73) Patentinhaber: ZF FRIEDRICHSHAFEN Aktiengesellschaft, 88038 Friedrichshafen (DE)
(72) Erfinder: RUNGE, Wolfgang, D-88214 Ravensburg (DE); BART, Jörg, D-88085 Langenargen (DE); WELTE, Anton, D-88048 Friedrichshafen (DE)
(86) Internationale Anmeldenummer: EP9302366
(87) Internationale Veröffentlichungsnummer: WO9405934

(56) Entgegenhaltungen:
- EP-A- 0 118 184
- EP-A- 0 207 231
- EP-A- 0 258 004
- EP-A- 0 421 241
- DE-A- 3 636 463
- US-A- 4 926 716

## Beschreibung

Die Erfindung betrifft eine Vorrichtung zur Regelung des Übersetzungsverhältnisses eines stufenlosen Getriebes in einem Kraftfahrzeug gemäß dem Oberbegriff des Anspruches 1.

In der Regel haben die eingangs erwähnten stufenlosen Getriebe Kegelscheiben, die zwischen sich ein umlaufendes Zugmittel einschließen. Über die in der Regel hydraulisch wirkende Stellvorrichtung werden axiale Anpreßkräfte auf die Kegelscheiben ausgeübt. Die Fahrzeuggeschwindigkeit eines mit einem stufenlosen Getriebe ausgerüsteten Kraftfahrzeugs wird mit dem Gas- oder Fahrpedal gesteuert. Über dieses Steuerorgan wird sowohl die Leistungsregeleinrichtung (Vergaser bzw. Einspritzpumpengestänge) als auch die Verstellung der Übersetzung des stufenlosen Getriebes beeinflußt. Es werden hiermit Solldrehzahlwerte für den Antriebsmotor vorgegeben.

Bei den z. B. aus VDI-Berichte 579, Seite 125 bis 129, bekannten Betriebsstrategien wird davon ausgegangen, daß der Fahrer durch die Stellung des erwähnten Steuerorgans einen Leistungswunsch vorgibt, aus dem, gegebenenfalls unter dem Einfluß von Optimierungskriterien, eine gewünschte Motordrehzahl nM-Soll resultiert. Ein Optimierungskriterium kann beispielsweise der Schnittpunkt einer Linie minimalen Kraftstoffverbrauchs mit der aktuellen Linie der Drosselklappenstellung im Motorkennfeld sein. Die zugehörige Scheibenübersetzung iV-Soll ergibt sich dann als Folgegröße aus der gewünschten Motordrehzahl nM-Soll und der aktuellen Fahrzeuggeschwindigkeit vF.

Bei einer sprungförmigen Änderung der Stellung des Steuerorgangs erfolgt die Verstellung auf den gewünschten stationären Solldrehzahlwert des Antriebsmotors nM-Soll entlang der entsprechenden (neuen) Linie der Drosselklappenstellung im Motorkennfeld. Die DE-A-36 36 463 schlägt ein Verfahren zur Begrenzung der Verstellgeschwindigkeit vor. Eine solche Begrenzung erfolgt im wesentlichen aus Gründen des Komforts, es sollen Momentensprünge und ungewollte Fahrzeugbeschleunigungen bzw. -verzögerungen vermieden werden.

Ferner wird ein möglichst direkter Bezug zwischen der Stellung des Steuerorgans und dem Fahreindruck hergestellt werden (Verbesserung des subjektiven Fahreindrucks).

Dem Vorteil eines stufenlosen Getriebes bei durchschnittlicher Fahrweise, nämlich ein äußerst bequemes Fahrverhalten, steht der Nachteil entgegen, daß es in besonderen Situationen mit einem ungleichmäßigen Beschleunigungsverhalten reagiert. Das subjektive Fahrempfinden (Driveability) läßt sich objektiv durch folgendes Verhalten verdeutlichen: Auf eine sprungförmige Änderung der Drosselklappenstellung springt der Solldrehzahlwert des Antriebsmotors in die Höhe. Im Gegensatz zu dieser signifikanten Erhöhung der Motordrehzahl bleibt die Fahrzeuggeschwindigkeit über einen gewissen Zeitraum zunächst konstant. Hieraus resultiert zumindest der Nachteil, daß sich die Beschleunigung nach Abschluß der Getriebeverstellung sprunghaft erhöht. Dieses Verhalten wird vom Fahrer nicht erwartet und daher als unangenehm empfunden. In vielen Fällen tritt noch erschwerend hinzu, daß der Fahrer, der über das Fahrpedal einen Leistungsbedarf angemeldet hat, aber trotz signifikanter Erhöhung der Motordrehzahl keine Beschleunigung des Fahrzeugs erfolgt, diese Situation dadurch zu bereinigen versucht, indem er einen noch höheren Leistungsbedarf anmeldet. Die Folge ist ein Übersteuern der Drosselklappe. Bei einsetzender Reaktion führt diese Übersteuerung zu einem Losschießen des Fahrzeugs.

Aus der US-A-4,926,716 ist eine Vorrichtung zur Regelung des Übersetzungsverhältnisses eines stufenlosen Getriebes nach dem Oberbegriff des Anspruchs 1 bekannt. Diese Vorrichtung zeigt einen Soll-/Ist-Vergleich der Drehzahlwerte eines Antriebsmotors. Die Solldrehzahlwerte werden hierbei aus dem Drosselklappen-Öffnungsgrad und der Fahrzeuggeschwindigkeit ermittelt, wobei über einen Sollwertfilter diese Solldrehzahlwerte nach einer Übergangsfunktion variiert werden können. Diese Übergangs funktion wird hierbei in Abhängigkeit von spezifischen Betriebszuständen, ausgeführt sind die Fahrstufen N, D, L1 und L2, ausgewählt. An der Vergleichsstelle stehen somit als Signale ein nach einer Übergangsfunktion variierter, instationärer Solldrehzahlwert und der gemessene Istdrehzahlwert des Antriebsmotors an. Die sich aus dem Soll-/ Ist-Vergleich ergebende Regeldifferenz wird einem das Stellsignal erzeugenden Drehzahlregler zugeführt.

Ausgehend von dem beschriebenen Stand der Technik besteht nun die der Erfindung zugrunde liegende Aufgabe darin, eine geeignetere, den Fahrbedingungen besser angepaßte Zuordnung der Größen zueinander zu finden.

Diese Aufgabe wird mit einer die Merkmale des Anspruchs 1 aufweisenden Vorrichtung gelöst.

Die Vorgabe des stationären Solldrehzahlwertes nM-Soll durch ein dreidimensionales Kennfeld hat zunächst eine Verbesserung des Bezugs zum Fahrpedal zur Folge. Über das dreidimensionale Kennfeld lassen sich besondere Fahrzustände (insbesondere Zug-, Schubbetrieb) berücksichtigen. Eine Linearisierung einer Kennlinie des Solldrehzahlwerts des Antriebsmotors nM-Soll in Abhängigkeit von der Stellung des Steuerorgans Leistungsregeleinrichtung ist bei kleinen Fahrzeuggeschwindigkeiten im Stadtverkehr vorteilhaft. Ebenso ist es möglich, eine Rückschaltung unter Null-Last bei langsamer Kurvenfahrt oder bei sehr geringen Fahrzeuggeschwindigkeiten (Stadtverkehr) durchzuführen. Der Sollwertfilter beeinflußt das dynamische Verhalten. Durch geeignete Übergangsfunktionen läßt sich eine bestimmte Charakteristik des Verstellverhaltens erzielen. Die Zeitkonstanten (Filterzeiten) lassen sich dynamisch, abhängig von bestimmten Fahrzuständen, variieren. Dies gilt inbesondere für die Fahrzustände Zugbetrieb, Schubbetrieb und Kick-down.

Um die Charakteristik des Verstellverhaltens des stufenlosen Getriebes abstimmen zu können, wird gemäß Anspruch 2 vorgeschlagen, den Sollwertfilter aus zwei in Reihe geschalteten Verzögerungsgliedern erster Ordnung zu bilden. Die Zeitkonstante des Sollwertfilters und dessen Verlauf der Übergangsfunktion ergibt sich dann aus dem Produkt einer ersten Zeitkonstanten mit einem Abstimmungsfaktor. Für spezifische Betriebszustände ist es ferner möglich, die Zeitkonstante (Anstiegszeit) als Funktion zweier Betriebsgrößen adaptiv zu beeinflussen. Bei den Betriebsgrößen handelt es sich um den dynamischen, instationären Solldrehzahlwert nM-Solldyn und der Regeldifferenz delta-nM als Differenz eines stationären Solldrehzahlwerts und des dynamischen, instationären Solldrehzahlwerts des Antriebsmotors. Eine weitere Betriebsgröße, insbesondere im Schubbetrieb, ist vorzugsweise die Fahrzeuggeschwindigkeit vF. Diese repräsentiert die aktuelle Fahrsituation und ermöglicht eine gute Abstimmung der Übersetzungsänderung im Schubbetrieb. Beispielsweise wirkt sich in vielen Fällen bei höheren Geschwindigkeiten eine Verstellung in die Position Overdrive günstig aus, da bereits der Luftwiderstand das Fahrzeug ausreichend verzögert, während sich in anderen Geschwindigkeitsbereichen eine Änderung des Drehzahlniveaus ungünstig auswirken kann. Bei der Berücksichtigung spezifischer Betriebszustände ist es generell vorteilhaft, die Filterzeiten als Funktion zweier Betriebsgrößen darzustellen und die Verknüpfung über dreidimensionale Kennfelder zu realisieren.

Gemäß Anspruch 3 wird vorgeschlagen, zur Wahl der jeweiligen Zeitkonstanten, abhängig von spezifischen Betriebszuständen, einen Strukturumschalter vorzusehen. Dieser Strukturumschalter sorgt bei spezifischen Betriebszuständen dafür, daß die Kennfeld- bzw. Kennlinienspeicher mit dem Sollwertfilter verbunden werden.

Weitere Merkmale und die daraus resultierenden Vorteile ergeben sich aus der Beschreibung eines Ausführungsbeispiels der Erfindung anhand der Zeichnungen.

Es zeigen:
- Fig. 1: ein Blockschaltbild mit einer Vorrichtung zur Regelung des Übersetzungsverhältnisses eines stufenlosen Getriebes;
- Fig. 2e: ein Blockschaltbild eines Sollwertfilters, dessen dynamisches Verhalten variabel ist;
- Fig. 3: ein Diagramm mit verschiedenen Charakteristiken möglicher Verstellverhalten;
- Fig. 4: ein Blockschaltbild eines Funktionsgliedes zur Vorgabe verschiedener Verstellzeiten, abhängig von pezifischen Betriebszuständen und
- Fig. 5: ein Blockschaltbild eines strukturvariablen Drehzahlreglers.

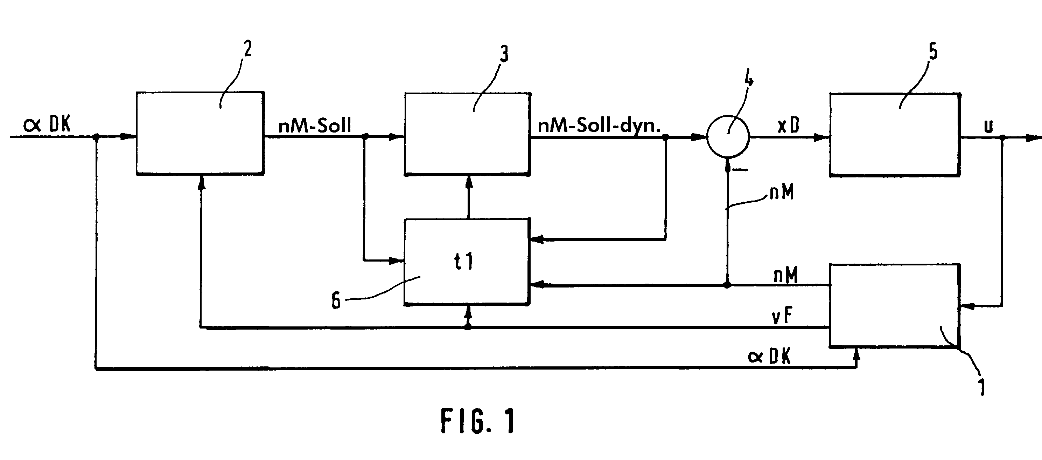

In Fig. 1 ist das Blockschaltbild einer Vorrichtung zur Regelung des Übersetzungsverhältnisses eines stufenlosen Getriebes abgebildet. Das stufenlose Getriebe, das, ebenso wie ein Motor und ein Fahrzeug, selbst nicht abgebildet ist, besteht aus einem Kegelscheibengetriebe. Dieses Kegelscheibengetriebe wird über eine hydraulisch wirkende Stellvorrichtung zur Veränderung seines Übersetzungsverhältnisses iV stufenlos verstellt. Stellvertretend für den Antriebsmotor, das stufenlose Getriebe und das Fahrzeug ist ein Funktionsblock 1 gezeigt, dem die Strecke der Regelvorrichtung entspricht.

Ein Funktionsblock 2 dient zur Darstellung eines stationären Betriebspunktes der Vorrichtung zur Regelung des Übersetzungsverhältnisses. Am Funktionsblock 2 liegt eine Eingangsvariable an, die den Leistungsbedarf repräsentiert, den der Fahrer des Fahrzeugs über ein geeignetes Steuerorgan anmeldet. Dieses Steuerorgan ist in der Regel ein Gaspedal, mit dem die Stellung einer Drosselklappe des Antriebsmotors als Leistungsregeleinrichtung verändert wird. Im vorliegenden Fall ist die Eingangsvariable eine aktuelle Drosselklappenstellung, die mit alpha-DK bezeichnet ist.

Am Funktionsblock 2 liegt ferner noch die aktuelle Fahrzeuggeschwindigkeit vF als Eingangsvariable an.

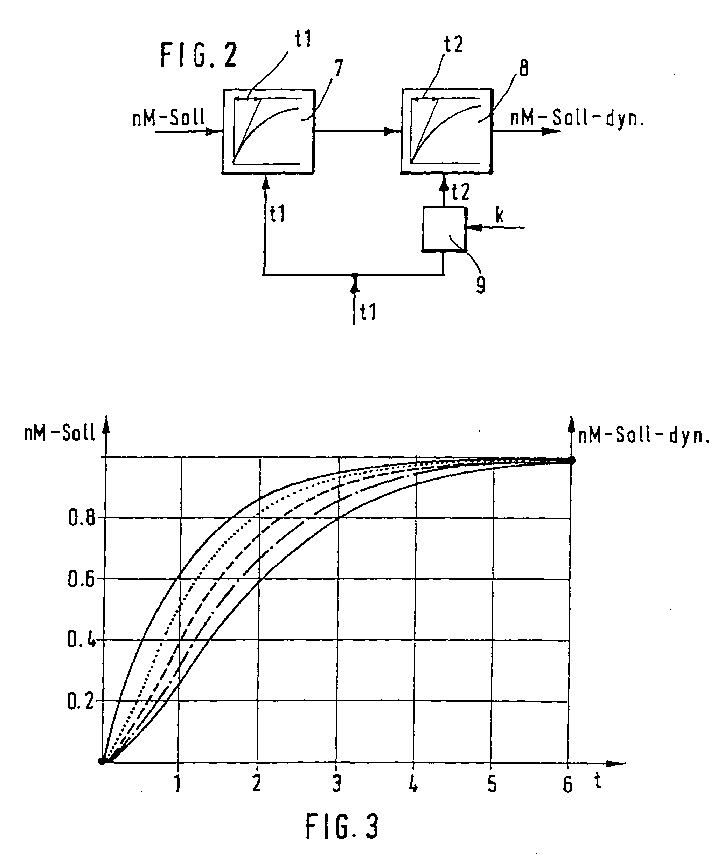

Der Funktionsblock 2 dient der Berechnung einer Führungsgröße, d. h. einem stationären Solldrehzahlwert des Antriebsmotors. Hierzu ist ein Speicher vorgesehen, in dem ein Betriebskennfeld abgelegt ist. Dieses Betriebskennfeld enthält eine Zuordnung der Stellung des Steuerorgans (Leistungsregeleinrichtung Fahr-, Gaspedal bzw. Drosselklappe oder Regelstange oder dergleichen) und der Fahrzeuggeschwindigkeit vF zu stationären Solldrehzahlwerten nM-Soll des Antriebsmotors. Diesem dreidimensionalen Betriebskennfeld wird - entsprechend dem über die Drosselklappe angemeldeten Leistungsbedarf - ein stationärer Solldrehzahlwert nM-Soll des Antriebsmotors entnommen. Am Ausgang des Funktionsblocks 2 liegt dieser stationäre Solldrehzahlwert nM-Soll an. Der stationäre Solldrehzahlwert des Antriebsmotors wird einem Signaleingang eines Sollwertfilters 3 zugeleitet. Mit diesem Sollwertfilter 3 ist der Verlauf eines instationären Solldrehzahlwertes nM-Soll-dyn bei sprungförmiger Änderung des stationären Solldrehzahlwertes nM-Soll durch gezielte Zuordnung einer Übergangsfunktion veränderlich. Es ist hierbei sehr vorteilhaft, wenn, wie im vorliegenden Fall, die Möglichkeit gegeben ist, aus mehreren Übergangsfunktionen eine auszuwählen, die einem spezifischen Betriebszustand am besten Rechnung trägt (Fig. 2).

Am Ausgang des Sollwertfilters 3 liegt somit ein nach einer Übergangsfunktion variierter, instationärer Solldrehzahlwert nM-Soll-dyn an. Dieser Wert wird einer Subtraktionsstelle 4 zugeführt. An der Subtraktionsstelle 4 liegt der instationäre Solldrehzahlwert nM-Soll-dyn als Ausgangssignal des Sollwertfilters 3 sowie der Istdrehzahlwert nM des Antriebsmotors an. Das Ergebnis der Subtraktion des in stationären Solldrehzahlwertes und dem Istdrehzahlwert des Antriebsmotors ist eine Regeldifferenz xD, die einem Drehzahlregler 5 zugeführt wird. Der Drehzahlregler 5 ist vorzugsweise als strukturvariabler Regler ausgebildet, wobei die Strukturumschaltung in Abhängigkeit der Regeldifferenz xD vorgenommen wird. Auch hierauf wird weiter unten eingegangen werden.

Der Drehzahlregler 5 liefert ein Stellsignal u nach Maßgabe der Differenz des dynamischen, instationären Solldrehzahlwerts und des Istdrehzahlwerts des Antriebsmotors. Über diese Stellsignale wird die selbst nicht dargestellte Stellvorrichtung, die Bestandteil der Strecke ist, beaufschlagt.

Aus dem bisher Gesagten geht hervor, daß die Vorrichtung zur Regelung des Übersetzungsverhältnisses zwei wesentliche Merkmale aufweist:

Eine Verstellstrategie, nach der ein statisches und dynamisches Verstellverhalten unter Berücksichtigung des subjektiven Fahrempfindens (Driveability) und aufgrund ökonomischer Überlegungen erfolgt. Das Ergebnis ist ein dynamischer, instationärer Solldrehzahlwert nM-Soll-dyn.
Der Drehzahlregler 5 hat Servofunktion und soll den Istdrehzahlwert nM des Antriebsmotors in allen Betriebszuständen möglichst schnell und stabil dem dynamischen, instationären Solldrehzahlwert nM-Soll-dyn angleichen.

Diese Trennung bietet Vorteile bei der fahrzeug- und kundenspezifischen Abstimmung, da die regelungstechnische Abstimmung für jeden Fahrzeugtyp lediglich einmal durchgeführt werden muß. Hingegen kann die Verstellstrategie beliebig variiert bzw. an Kundenwünsche angepaßt werden.

Dem Sollwertfilter 3 ist ein Funktionsblock 6 parallel geschaltet, der der Vorgabe von unterschiedlich großen Anstiegszeiten t1 dient. Vorzugsweise wird die Anstiegszeit t1 dem Sollwertfilter 3, gegebenenfalls als variable Größe, vorgegeben. An den Eingängen des Funktionsblocks 6 liegt der dynamische, instationäre Solldrehzahlwert nM-Soll-dyn, der Istdrehzahlwert nM, die Fahrzeuggeschwindigkeit vF und der stationäre Solldrehzahlwert nM-Soll des Antriebsmotors an.

Der Sollwertfilter 3 (vergleiche Blockschaltbild entsprechend Fig. 2) besteht vorzugsweise aus zwei in Serie geschalteten PT1-Gliedern 7 und 8. Der Sollwertfilter 3 weist demnach insgesamt PT2-Verhalten auf. Das erste PT1-Glied 7 hat die Zeitkonstante t1, die vom Funktionsblock 6 vorgegeben wird, während das zweite PT1-Glied 8 die Zeitkonstante t2 aufweist. Über ein Einstellglied 9 wird eine Möglichkeit zur Abstimmung geschaffen, so daß die Zeitkonstante t2 der Zeitkonstante t1, multipliziert mit einem Abstimmfaktor k, entspricht. Durch das Verhältnis der beiden Zeitkonstanten (Filterzeiten) t2/t1 = k = const. läßt sich die Übergangsfunktion vorgeben. Die Möglichkeit der Abstimmung erleichtert die fahrzeugspezifische Anpassung. Daneben besteht, wie bereits erwähnt, eine selbsttätige Vorgabe einer der Zeitkonstanten, vorzugsweise der Zeitkonstante t1 des PT1-Gliedes 7, in Abhängigkeit spezifischer Betriebszustände.

Anhand des Diagramms entsprechend Fig. 3 ist ersichtlich, wie das Verhältnis der beiden Zeitkonstanten (Filterzeiten) t2/t1 = k den Verlauf der Übergangsfunktionen beeinflußt. Je nachdem, wie der Abstimmfaktor k gewählt wird, zeigt die Übergangsfunktion reines PT1-Verhalten, das sich in Richtung eines PT2-Verhaltens mehr oder weniger verändern läßt.

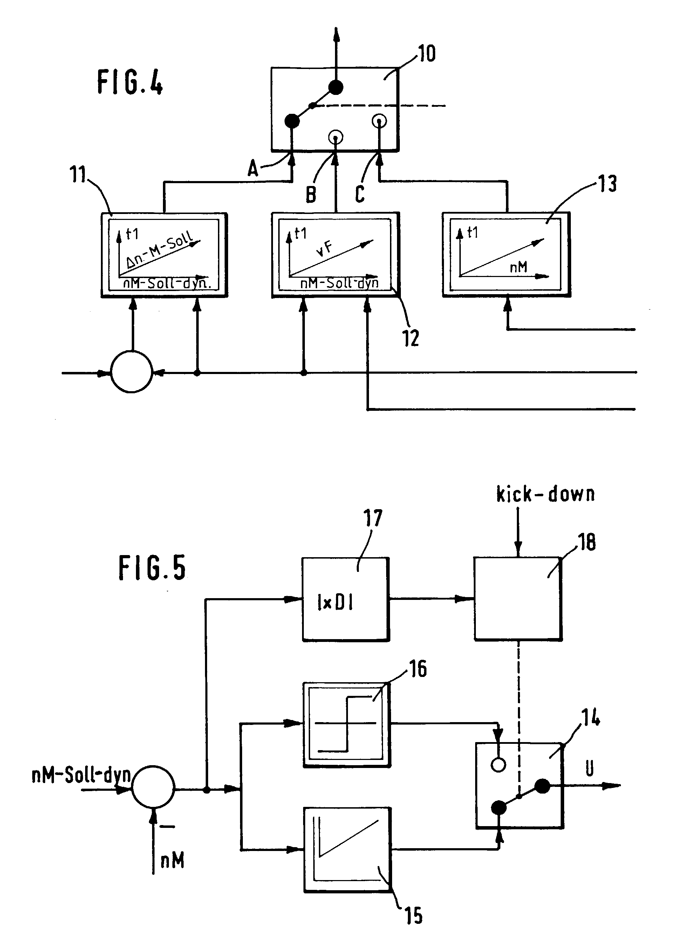

Der Funktionsblock 6 kann entsprechend dem Blockschaltbild nach Fig. 4 ausgebildet sein. Für spezifische Betriebszustände, wie: Zugbetrieb, Schubbetrieb und Kick-down, ist zusätzlich ein Strukturumschalter 10 vorgegeben. Die für den jeweiligen Betriebszustand maßgebliche Zeitkonstante t1 ist somit variabel. Die Umschaltung erfolgt selbsttätig in Abhängigkeit fahrzeugspezifischer Parameter, anhand derer sich diese spezifischen Betriebszustände eindeutig erkennen lassen.

Im Zugbetrieb befindet sich der Strukturumschalter 10 im dargestellten Zustand. Die Position A ist geschaltet. Die Zeitkonstante t1 wird als Funktion zweier Betriebsgrößen adaptiv beeinflußt. Die Verknüpfung erfolgt durch ein dreidimensionales Kennfeld, das in einem Speicher 11 abgelegt ist. Die Zeitkonstante t1 ist somit eine Funktion des dynamischen Solldrehzahlwerts nM-Soll-dyn und einer Regeldifferenz delta-nM. Diese Regeldifferenz stellt die Differenz des Solldrehzahlwerts und dem dynamischen Solldrehzahlwert des Antriebsmotors dar. Die Regeldifferenz bildet ein Maß für die Dynamik des Steuerorgangs (Leistungsregeleinrichtung; Gaspedal, Regelstange oder dergleichen). Tendenziell wird durch die Verarbeitung von delta-nM erreicht, daß kleine Änderungen der Drosselklappenstellung pro Zeiteinheit keine bzw. eine stark verzögerte Änderung der Übersetzung des stufenlosen Getriebes bewirkt, während große Änderungen pro Zeiteinheit eine entsprechend schnelle Reaktion der Stellvorrichtung bewirken.

Befindet sich das Fahrzeug im Schubbetrieb, schaltet der Strukturumschalter 10 in die mit B bezeichnete Position. Die Zeitkonstante t1 (Anstiegszeit) wird auch in diesem Fall als Funktion zweier Betriebsgrößen adaptiv beeinflußt. Die Verknüpfung erfolgt ebenfalls über ein dreidimensionales Betriebskennfeld, das in einem Speicher 12 abgelegt ist. Das Kennfeld berücksichtigt die Kenngrößen dynamischer, instationärer Drehzahlsollwert nM-Soll-dyn und die aktuelle Fahrzeuggeschwindigkeit vF. Die aktuelle Fahrzeuggeschwindigkeit repräsentiert die Ist-Fahrsituation. Die Zeitkonstante t1 ist somit eine Funktion von nM-Soll-dyn und des Werts von vF.

Da das im Speicher 12 abgelegte Betriebskennfeld die Fahrzeuggeschwindigkeit vF enthält, ist eine gute Abstimmung der Übersetzungsänderung im Schubbetrieb gewährleistet. Beispielsweise wirkt sich in vielen Fällen bei höheren Geschwindigkeiten eine Verstellung in die Position Overdrive günstig aus. Dies gilt für Geschwindigkeiten, bei denen bereits der Luftwiderstand ausreichend verzögert. In anderen Fällen kann es jedoch günstiger sein, keine Änderung des Drehzahlniveaus herbeizuführen.

Befindet sich der Strukturumschalter 10 in der Schaltposition C, ist die Kick-down-Funktion angewählt. Unter Berücksichtigung von Stabilitäts- und Komfortgrenzen wird möglichst schnell in Richtung auf maximale Motorleistung verstellt. In diesem Fall wird die Zeitkonstante t1 (Filterzeit) einem Speicher 13 entnommen, in dem eine Kennlinie tl als Funktion der Motordrehzahl nM abgelegt ist.

Der Drehzahlregler 5 ist als strukturvariabler Regler ausgebildet, dessen Blockschaltbild der Fig. 5 zu entnehmen ist.

Der unterlagerte Drehzahlregler ist aus folgenden Komponenten zusammengesetzt: einem Strukturumschalter 14, einem Regler 15 mit PID-Verhalten und einem Kennlinienglied 16, über das eine minimale bzw. maximale Stellgröße ausgegeben wird.

Die Strukturumschaltung erfolgt in Abhängigkeit vom Absolutbetrag einer Regeldifferenz xD, die der Differenz der Motordrehzahl und der dynamischen Sollwertdrehzahl (absolut) entspricht. Die Berücksichtigung erfolgt in einem Regelglied 17. Die Regeldifferenz xD wird einem Vergleichselement 18 zugeführt, an dem auch der Eingang für die Kick-down-Funktion anliegt. Beim Überschreiten vorgegebener Grenzwerte wird der Strukturumschalter 14 aktiviert, was durch die gestrichelt eingezeichnete Linie verdeutlicht ist.

Die beschriebene Vorrichtung zur Regelung des Übersetzungsverhältnisses eignet sich grundsätzlich für alle Bauarten von stufenlosen Getrieben. Die Stellvorrichtung kann elektrohydraulisch oder elektromechanisch ausgebildet sein. Bei dem stufenlosen Getriebe kann es sich insbesondere um ein Kettenwandlergetriebe oder ein hydrostatisches Getriebe handeln. Derartige stufenlose Getriebe finden insbesondere bei Personen- und Nutzkraftwagen Verwendung.

### Bezugszeichen

- 1: Funktionsblock
- 2: Funktionsblock
- 3: Sollwertfilter
- 4: Subtraktionsstelle
- 5: Drehzahlregler
- 6: Funktionsblock
- 7: PT1-Glied
- 8: PT1-Glied
- 9: Einstellglied
- 10: Strukturumschalter
- 11: Speicher
- 12: Speicher
- 13: Speicher
- 14: Strukturumschalter
- 15: Regler
- 16: Kennlinienglied
- 17: Regelglied
- 18: Vergleichselement

## Patentansprüche

1. Vorrichtung zur Regelung des Übersetzungsverhältnisses eines stufenlosen Getriebes in einem Fahrzeug mit einem Antriebsmotor und einer Leistungsregeleinrichtung, der über ein Fahrpedal Solldrehzahlwerte des Antriebsmotors vorgegeben werden, die mit gemessenen Istdrehzahlwerten des Antriebsmotors verglichen werden, mit einer Stellvorrichtung zur Veränderung des Übersetzungsverhältnisses des stufenlosen Getriebes, welcher Stellsignale (u) eines Drehzahlreglers (5) nach Maßgabe der Differenzen von Soll- und Istdrehzahlwerten zugeführt werden, mit einem Sollwertfilter (3), an dessen Ausgang ein nach einer Übergangsfunktion variierter, instationärer Solldrehzahlwert (nM-Soll-dyn) ansteht und wobei dem Drehzahlregler (5) eine Regeldifferenz (xD) zugeführt wird, die aus dem instationären Solldrehzahlwert (nM-Soll-dyn) und dem Istdrehzahlwert (nM) des Antriebsmotors gebildet wird, wobei der Verlauf des instationären Solldrehzahlwertes (nM-Soll-dyn) bei sprungförmiger Änderung eines stationären Solldrehzahlwertes (nM-Soll) durch Zuordnung einer Übergangsfunktion in Abhängigkeit von spezifischen Betriebszuständen veränderlich ist, wobei der Sollwertfilter (3) ein Verzögerungsglied (PT1-Glied) erster Ordnung einschließt, dessen Zeitkonstante (t1) in Abhängigkeit von spezifischen Betriebszuständen variabel ist, dadurch **gekennzeichnet,** daß ein stationärer Solldrehzahlwert (nM-Soll) einem Betriebskennfeld, welches eine Zuordnung der Stellung (α-DK) der Leistungsregeleinrichtung und der Fahrzeuggeschwindigkeit (vF) zu Solldrehzahlwerten (nM-Soll) trifft, entnommen und dem Signaleingang des Sollwertfilters (3) zugeleitet wird, wobei für den spezifischen Betriebszustand des Zugbetriebs die Zeitkonstante (t1) einem Kennfeldspeicher (11) mit einem Kennfeld entnommen wird, das eine Zuordnung zwischen einem instationären Solldrehzahlwert (nM-Soll-dyn) und der Differenz (Δ-nM-Soll) aus dem stationären Solldrehzahlwert und dem instationären Solldrehzahlwert (nM-Soll-dyn) des Antriebsmotors (nM-Soll) trifft und für den spezifischen Betriebszustand des Schubbetriebs die Zeitkonstante (t1) einem Kennfeldspeicher (12) mit einem Kennfeld entnommen wird, das eine Zuordnung zwischen einem instationären Solldrehzahlwert (nM-Soll-dyn) und der Fahrzeuggeschwindigkeit (vF) trifft und für den spezifischen Betriebszustand Kick-down die Zeitkonstante (t1) einem Kennlinienspeicher (13) mit einer Kennlinie entnommen wird, die eine Funktion der Istdrehzahl (nM) des Antriebsmotors ist.

2. Vorrichtung nach Anspruch 1, dadurch **gekennzeichnet**, daß bei dem Sollwertfilter (3) zu dem Verzögerungsglied (PT1-Glied) erster Ordnung ein weiteres Verzögerungsglied (8) erster Ordnung in Reihe geschaltet ist, dessen Zeitkonstante und dessen Verlauf der Übergangsfunktion sich aus dem Produkt der ersten Zeitkonstanten (t1) mit einem Abstimmungsfaktor (k) ergibt.

3. Vorrichtung nach den Ansprüchen 1 und 2, dadurch **gekennzeichnet,** daß zur Vorgabe der von spezifischen Betriebszuständen abhängigen Zeitkonstangen (t1) ein Strukturumschalter (10) vorgesehen ist, der die Kennfeld- bzw. Kennlinienspeicher (11, 12, 13) mit dem Sollwertfilter (3) verbindet.

## Claims

1. Device for regulating the transmission ratio of an infinitely variable transmission in a vehicle with a driving motor and an output regulating system of which speed of rotation set values of the driving motor are predetermined by an accelerator pedal and are compared with measured speed of rotation actual values of the driving motor, with an adjusting device for changing the transmission ratio of the infinitely variable transmission to which adjustment signals (u) of a speed regulator (5) are supplied according to the differences in speed of rotation set values and actual values, with a set value filter (3) provided with an unsteady speed of rotation set value (nM-set-dyn) varied according to a transient function at its output and wherein a control difference (xD) formed from the unsteady speed of rotation set value (nM-set-dyn) and the speed of rotation actual value (nM) of the driving motor is fed to the speed regulator (5), wherein the trend of the unsteady speed of rotation set value (nM-set-dyn) during an abrupt change in a stationary speed of rotation set value (nM-set) can be varied as a function of specific operating states by allocation of a transient function, wherein the set value filter (3) encloses a first order delay element (PT1-element) of which the time constant (t1) is variable as a function of specific operating states, characterised in that a stationary speed of rotation set value (nM-set) is inferred from an operating characteristic map which relates to an allocation of the position (α-DK) of the output regulating system and the vehicle speed (vF) to speed of rotation set values (nM-set) and is supplied to the signal input of the set value filter (3), wherein, for the specific operating state of the pulling operation, the time constant (t1) is inferred from a characteristic map memory (11) with a characteristic map which relates to an allocation between an unsteady speed of rotation set value (nM-set-dyn) and the difference (Δ-nM-set) from the stationary speed of rotation set value and the unsteady speed of rotation set value (nM-set-dyn) of the driving motor (nM-set) and, for the specific operating state of the over-run the time constant (t1) is inferred from a characteristic map memory (12) with a characteristic map which relates to an allocation between an unsteady speed of rotation set value (nM-set-dyn) and the vehicle speed (vF) and, for the specific operating state kick-down, the time constant (t1) is inferred from a characteristic curve memory (13) with a characteristic curve which is a function of the actual speed of rotation (nM) of the driving motor.

2. Device according to claim 1, characterised in that with the set value filter (3), to the first order delay element (PT1 element) there is connected in series a further first order delay element (8) of which the time constant and of which the transient function trend emerges from the product of the first time constants (t1) with a tuning factor (k).

3. Device according to claims 1 and 2, characterised in that, for predetermining the time constants (t1) dependent on specific operating states, a structure selector (10) is provided which connects the characteristic map or characteristic curve memories (11, 12, 13) to the set value filter (3).

## Revendications

1. Dispositif de réglage du rapport des changements de vitesse d'une transmission progressive dans un véhicule à moteur, avec une installation de régulation de puissance à laquelle sont transmises, au moyen d'une pédale des valeurs de consigne de vitesse qui sont comparées avec les valeurs réelles de vitesse du moteur, avec un dispositif de réglage pour varier le rapport des changements de vitesse de la transmission progressive auquel sont fournis des signaux de réglage (u) d'un régulateur de vitesse (5) selon les différences entre les valeurs de consigne et les valeurs réelles de la vitesse, avec un filtre des valeurs de consigne (3) à la sortie duquel se présente une valeur de consigne de vitesse variée après une réponse indicielle et non stationnaire (nM-de consigne-dyn) et où une différence de réglage (xD) est amenée au régulateur de vitesse (5), résultant de la valeur de consigne de la vitesse non stationnaire (nM-de consigne-dyn) et de la valeur réelle de la vitesse (nM) du moteur, l'évolution de la valeur de consigne non stationnaire (nM-de consigne-dyn) étant variable lors de modifications discontinues d'une valeur de consigne stationnaire de la vitesse (nM-de consigne) par l'attribution d'une réponse indicielle en fonction d'états de marche spécifiques, le filtre des valeurs de consigne (3) intégrant un élément de temporisation (élément PT1) du premier degré dont la constante de temps (t1) est variable en fonction d'états de marche spécifiques, **caractérisé en ce que :**
une valeur de consigne de vitesse stationnaire (nM-de consigne) est prélevée d'un diagramme caractéristique de fonctionnement qui effectue une affectation de la position (α-DK) du dispositif de régulation de puissance et de la vitesse du véhicule (vF) aux valeurs de consigne de vitesse (nM-de consigne) et en ce que cette valeur est amenée à l'entrée des signaux dufiltre des valeurs de consigne (3), la constante de temps (t1) pour un état de marche spécifique en traction étant prélevée dans une mémoire de diagrammes caractéristiques (11) avec un diagramme caractéristique qui effectue une affectation entre une valeur de consigne de vitesse non stationnaire (nM-de consigne-dyn) et la différence (Δ-nM-de consigne) entre la valeur de vitesse de consigne stationnaire et la valeur de vitesse de consigne non stationnaire (nM-de consigne-dyn) du moteur (nM-de consigne) et pour l'état de marché spécifique en poussée, la constante de temps (t1) étant prélevée dans une mémoire de diagrammes caractéristiques (12) avec un diagramme qui effectue une affectation entre une valeur de vitesse de consigne non stantionnaire (nM-de consigne-dyn) et la vitesse du véhicule (vF) et pour l'état de fonctionnement spécifique "Kick-down", la constante de temps (t1) étant prélevée dans une mémoire de diagrammes caractéristiques (13) avec un diagramme qui est une fonction de la vitesse réelle (nM) du moteur.

2. Dispositif selon revendication 1, **caractérisé en ce que**
pour le filtre des valeurs de consigne (3) l'élément temporisateur (élément PT1) du premier degré est mis en série avec un autre élément temporisateur (8) de premier degré, dont la constante de temps et l'allure de la réponse indicielle résulte du produit de la première constante du temps (t1) avec un coefficient de synchronisation (k).

3. Dispositif selon les revendications 1 et 2, **caractérisé en ce que**
un commutateur de structure (10) est prévu pour la détermination d'états de fonctionnement spécifiques fonction de la constante du temps (t1), ce commutateur reliant les mémoires des diagrammes - respectivement des caractéristiques - (11,12,13) avec le filtre de la valeur de consigne (3).
